# EUROPÄISCHE PATENTSCHRIFT

(11) **EP 3 490 274 B1**
(45) Veröffentlichungstag und Bekanntmachung des Hinweises auf die Patenterteilung: **12.04.2023**
(21) Anmeldenummer: 18189137.5
(22) Anmeldetag: 15.08.2018
(51) Int. Cl.: H04M 3/44, H04M 3/56, H04R 27/00

(54) **SPRECHSTELLE FÜR EIN INTERCOM-NETZWERK**
STATION FOR AN INTERCOM NETWORK
POSTE TÉLÉPHONIQUE POUR UN RÉSEAU D'INTERCOMMUNICATION

(30) Priorität: 28.11.2017 DE 102017128115; 14.02.2018 DE 102018103272
(43) Veröffentlichungstag der Anmeldung: 29.05.2019
(73) Patentinhaber: RIEDEL Communications International GmbH, 42109 Wuppertal (DE)
(72) Erfinder: Sieben, Hubert, 42369 Wuppertal (DE); Dodson, Jake, 42117 Wuppertal (DE); Riedel, Thomas, 42109 Wuppertal (DE)
(74) Vertreter: Roche, von Westernhagen & Ehresmann

(56) Entgegenhaltungen:
- DE-A1- 2 636 849
- DE-T2- 60 202 397
- DE-T2- 69 122 908
- US-A1- 2006 078 138
- Riedel: "Performer - Installationshandbuch für Mainframes, Sprechstellen und Zubehör", , 31. Dezember 2015 (2015-12-31), Seiten 1-126, XP055560466, Gefunden im Internet: URL:https://www.riedel.net/fileadmin/user_ upload/800-downloads/06.0-Manuals-Intercom /Performer_Installationshandbuch_v1_1.pdf [gefunden am 2019-02-21]

## Beschreibung

Die Erfindung betrifft eine Sprechstelle für ein Intercom-Netzwerk nach Anspruch 1.

Die Anmelderin entwickelt und fertigt seit mehr als 30 Jahren Intercom-Netzwerke und deren Teile, die sogenannten Sprechstellen.

Sprechstellen des Standes der Technik sind in der Patentanmeldung DE 10 2014 011 963 A1 und in den nachveröffentlichten Patentanmeldungen DE 10 2017 107 148 A1, DE 10 2017 107 150 A1, DE 10 2017 106 946 A1, DE 10 2017 116 002 A1, DE 10 2017 116 273 A1 der Anmelderin offenbart.

Sprechstellen der erfindungsgemäßen Art dienen der Verwendung in Intercom-Netzwerken. Über ein Intercom-Netzwerk werden Audiodaten übermittelt. Intercom-Netzwerke stellen insoweit sehr komplex ausgebildete Netzwerke von Gegensprechanlagen bereit, wie sie im Veranstaltungsbereich, zu Live-Veranstaltungen, z. B. bei Sportveranstaltungen und Musikveranstaltungen, eingesetzt werden.

Der Begriff "Sprechstelle" wird im Rahmen der vorliegenden Patentanmeldung auch als ein Synonym zu den Begriffen "Intercom panel", "Intercom-Einheit", "Intercom-Station" oder "Teilnehmer eines Intercom-Netzwerkes" verwendet.

Sprechstellen der bekannten Art weisen auf ihrer Gehäusefront oder Vorderseite eine Vielzahl von Bedienelementen, Funktionstasten, Auswahltasten, Anschlüssen und Displays auf. Der zur Verfügung stehende Platz oder die zur Verfügung stehende Anordnungsfläche auf der Gehäusefront ist beschränkt. Der Platz für die Anordnung der Bedienelemente, Funktionselemente, Anschlüsse und Displays ist beispielsweise aus dem Grunde beschränkt, dass die Sprechstelle Abmessungen aufweisen soll, die ein Einschieben einer Sprechstelle in ein vorgegebenes Rack, also in einen Montagerahmen, zu dem Zweck der Festlegung der Sprechstelle an dem Rack, ermöglicht. Auch sind Sprechstellen bekannt, die auf einen Tisch gestellt werden können.

Jedenfalls ist aufgrund der vorgegebenen Abmessungen eines Einbaurahmens einerseits auch eine Abmessung der Sprechstelle vorgegeben: Zum anderem besteht das Bedürfnis, möglichst viele unterschiedliche Bedienelemente und Funktionselemente sowie Displays unterbringen: Die Anordnungsfläche für die Vielzahl von Instrumenten kann allerdings nicht beliebig vergrößert werden.

Aus der Druckschrift DE 602 02 397 T2 geht ein Mobiltelefon mit einer besonderen Lautsprecheranordnung hervor. Die Druckschrift offenbart keine Sprechstelle mit einer Vielzahl von Auswahltasten, die infolge einer Betätigung eine unmittelbare Hör- oder Sprechverbindung zu einer ausgewählten anderen Sprechstelle des Intercom-Netzwerkes bereitstellt. Auch offenbart die Druckschrift keine Rückseite eines Gehäuses, auf der eine Vielzahl von Anschlüssen angeordnet sind.

Die US 2006/078138 A1 offenbart ein Mobiltelefon mit einer besonderen Lautsprecheranordnung, mit der die Dicke des Gerätes reduziert werden kann. Die Druckschrift offenbart keine Sprechstelle für ein Intercom-Netzwerk mit einer Vielzahl von Auswahltasten, die infolge einer Betätigung eine unmittelbare Hör- oder Sprechverbindung zu anderen Teilnehmern bereitstellen. Auch offenbart die Druckschrift keine Gehäuserückseite mit einer Vielzahl von Anschlüssen.

DE 26 36 849 A1 offenbart eine Lautsprechereinrichtung für Fernsprechapparate in Form eines herkömmlichen Wählscheibentelefons. Hieraus geht nicht die Merkmalsgruppe hervor, wonach eine Öffnung in der Gehäusefront einen Öffnungsquerschnitt aufweist, der nur einen Bruchteil der Schallaustrittsfläche beträgt.

Hiervon ausgehend besteht die Aufgabe der Erfindung darin, eine Sprechstelle der bekannten, eingangs beschriebenen Art derart weiter zu entwickeln, dass eine verbesserte Möglichkeit zur Anordnung von Funktionselementen, Bedienelementen und/oder Anschlüssen und/oder Displays an der Gehäusefront bereitgestellt wird.

Die Erfindung löst diese Aufgaben mit den Merkmalen des Anspruches 1.

Gemäß der Erfindung ist an der Sprechstelle wenigstens ein Lautsprecher fest angeordnet. Vorteilhafterweise sind an der Sprechstelle zwei oder noch mehr Lautsprecher fest angeordnet.

Der Lautsprecher ist gemäß der Erfindung in einem Unterbringungsraum zwischen der Gehäusefront und der Gehäuserückseite untergebracht. Er ist dabei gegenüber der Gehäusefront nach hinten versetzt angeordnet. Dies bedeutet, dass der Lautsprecher sich nicht unmittelbar hinter einer frontseitigen Gehäuseplatte befindet, wie beim Stand der Technik, sondern demgegenüber deutlich, d. h. mindestens mehrere Millimeter, vorteilhafterweise mehrere Zentimeter, beabstandet von der Innenseite der die Gehäusefront bildenden Wandung des Gehäuses, nach hinten versetzt, angeordnet ist.

Der Lautsprecher weist eine Schallaustrittsfläche auf. Dabei handelt es sich insbesondere um eine herkömmliche Membran eines im Wesentlichen herkömmlich ausgebildeten Lautsprechers. Die Schallaustrittsfläche kann beispielsweise kreisförmig ausgebildet sein. Sie kann aber auch eine andere Kontur aufweisen.

Von der Schallaustrittsfläche propagiert der von dem Lautsprecher emittierte Schall zu einer Öffnung in der Gehäusefront. Gemäß der Erfindung ist vorgesehen, dass die Öffnung in der Gehäusefront einen Öffnungsquerschnitt aufweist, der deutlich kleiner ist als die Schallaustrittsfläche. Die Öffnung weist einen Öffnungsquerschnitt auf, der nur einen Bruchteil der Schallaustrittsfläche beträgt. Der Öffnungsquerschnitt ist dabei zumindest kleiner als die Hälfte der Schallaustrittsfläche.

Als Bruchteil im Sinne der vorliegenden Patentanmeldung wird ein Anteil verstanden, der jedenfalls nicht größer ist als 50%.

Durch die Beabstandung des Lautsprechers von der Gehäusefront kann ein zur Schallweiterleitung dienender Kanal innerhalb des Gehäuses gebildet werden, der beispielsweise auch die Anordnung eines Schalltrichters ermöglicht. Entlang dieses Schallweiterleitungsraums oder Kanals wird der von dem Lautsprecher emittierte Schall verdichtet, und auf eine kleine Öffnung in der Gehäusefront konzentriert. Durch diese kleine Öffnung kann der Schall austreten. Dadurch, dass der Lautsprecher von der Gehäusefront beabstandet, nämlich nach hinten versetzt, angeordnet ist, wird an der Gehäusefront zusätzliche Anordnungs- oder Positionierfläche frei, entlang der weitere Bedienelemente oder Displays oder Anschlüsse oder jedenfalls Bereiche oder Abschnitte von Bedienungselementen oder Bereiche oder Abschnitte von Displays angeordnet werden können.

Beim Stand der Technik waren erhebliche Flächenanteile der Gehäusefront für den Lautsprecher reserviert. Dies ging damit einher, dass der Lautsprecher unmittelbar an der Gehäusefront angeordnet und/oder montiert war. Demgegenüber kann durch die erfindungsgemäße Änderung der Position des Lautsprechers mehr Anordnungsraum für die Elemente und Displays auf der Gehäusefront gewonnen werden. Dies führt allerdings gemäß der Erfindung nicht zu einer Beeinträchtigung der Audioqualität. Hier kann als besondere Maßnahme, wie beispielsweise durch die Anordnung eines gesonderten Schalltrichters, eine besonders vorteilhafte und optimierte Weiterleitung und Verdichtung von Schallwellen von der Schallaustrittsfläche hin zu der kleinen Öffnung erreicht werden.

Von der Erfindung ist insbesondere umfasst, wenn jeder Schallaustrittsfläche eines Lautsprechers auch nur eine einzige Öffnung an der Gehäusefront zugeordnet ist. In einer Variante der Erfindung kann die Öffnung aber auch in mehrere Teilöffnungen unterteilt sein. Die Teilöffnungen können auch voneinander beabstandet auf der Gehäusefront angeordnet sein. Von der Erfindung wird schließlich auch umfasst, wenn einem Lautsprecher zwei oder mehr Schalltrichter zugeordnet sind, die zu den gesonderten Teilöffnungen an der Gehäusefront führen. Auch bei dieser Alternative der Erfindung ist allerdings vorgesehen, dass die durch die mehreren Teilöffnungen beaufschlagte Anordnungs- oder Positionierfläche für die Teilöffnungen auf der Gehäusefront in Summe deutlich kleiner ist als die Schallaustrittsfläche des Lautsprechers. Ansonsten würde der von der Erfindung beabsichtigte Vorteil eines Zugewinns an Positionierfläche auf der Gehäusefront nicht erreicht.

Die Sprechstelle gemäß der Erfindung umfasst ein insbesondere quaderförmiges Gehäuse. Es handelt sich dabei um blockartige Elemente mit einer geringen Höhe, einer demgegenüber größeren Tiefe und einer großen Breite. Diese sind rackartig, geeignet für einen rackartigen Einschub, ausgebildet.

Die erfindungsgemäße Sprechstelle weist eine Gehäusefront und eine Gehäuserückseite auf. Auf der Gehäusefront sind dicht gedrängt zahlreiche Bedienelemente, Anschlüsse und mehrere Display angeordnet. Die Bedienelemente sind insbesondere programmierbar. Zumindest einige der Bedienelemente sind programmierbar. Programmierbar bedeutet, dass den Bedienelementen durch eine Auswahl, also durch eine Programmierung unterschiedliche Funktionen zugewiesen werden können. Hierzu kann eine Programmierbarkeit an der Sprechstelle selbst, oder unter Zuhilfenahme einer Vermittlungsstelle erfolgen, mit der die Sprechstelle verbunden ist. In der Regel umfasst die Möglichkeit einer Programmierbarkeit, dass den Bedienelementen unterschiedliche Funktionen zugeordnet werden können. So kann eine bestimmte Auswahltaste nach einer Betätigung - je nach Programmierung - entweder mit einer ersten anderen Sprechstelle oder mit einer zweiten anderen Sprechstelle eine Audioverbindung herstellen.

Die erfindungsgemäße Sprechstelle umfasst mehrere Displays. Die Displays umfassen Anzeigen, die Informationen und/oder Parameter und/oder Funktionen anzeigen, die den Bedienelementen zugeordnet oder zuordnenbar sind. Insbesondere können die Displays Bereiche oder Abschnitte auffassen, die auch in einem räumlichen - und zusätzlich in einem inhaltlichen - Zusammenhang zu dem jeweiligen Bedienelement stehen. Der Benutzer einer Sprechstelle kann insoweit durch einen Blick auf ein Display z. B. erkennen, welches Bedienelement welche Funktion aufweist.

Beispielsweise kann eine erfindungsgemäße Sprechstelle eine Vielzahl von Auswahltasten umfassen, die infolge einer Betätigung eine Hör- und/oder Sprechverbindung mit einer anderen Sprechstelle gewährleisten. Auf dem Display kann - in unmittelbarer räumlichen Zuordnung zu den einzelnen Bedienelemente - eine Anzeige erfolgen, mit welcher anderen Sprechstelle, vor oder nach Betätigung eines bestimmten Bedienelementes, diese Sprechstelle eine Audio-Verbindung aufbauen kann. Hierfür können beispielsweise Benutzernamen der Personen auf dem Display angezeigt werden, die an der anderen Sprechstelle tätig sind. Auch können alternativ den Sprechstellen Namen, Kennzeichen, Nummern oder dergleichen zugeordnet werden.

Die Auswahltasten können beispielsweise drei Positionen umfassen, nämlich eine Mittelposition oder Ruheposition, in die hinein die Auswahltaste vorgespannt ist. Auch kann jede Auswahltaste zwei Endpositionen oder zwei Arbeitspositionen umfassen, beispielsweise eine obere und eine untere Arbeitsposition oder Schaltposition. Dazu kann vorgesehen sein, dass die Auswahltaste gedrückt gehalten werden muss, um eine bestimmte Funktion auszuüben. So kann beispielsweise eine Auswahltaste ausgehend von einer Mittellage nach oben oder alternativ nach unten ausgelenkt werden, wobei bei Betätigung der Auswahltaste entlang einer Richtung nach oben eine Sprechverbindung und bei Betätigung derselben Auswahltaste nach unten hin in die andere Arbeitsposition eine Hörverbindung in derselben anderen Sprechstelle erreicht wird.

Die Hör- und/oder Sprechverbindung der erfindungsgemäßen Sprechstelle zu einer ausgewählten anderen Sprechstelle des Intercom-Netzwerkes wird über eine Vermittlungsstelle bereitgestellt. Dort wird das Intercom-Netzwerk administriert.

Alternativ kann vorgesehen sein, dass die unmittelbare Hör- und/oder Sprechverbindung der erfindungsgemäßen Sprechstelle zu einer weiteren Sprechstelle des Intercom-Netzes nicht unter Zwischenschaltung einer Vermittlungsstelle stattfindet, sondern die beiden Sprechstellen - oder mehrere Sprechstellen eines Intercom-Netzwerkes - unmittelbar, ohne Zwischenschaltung einer Vermittlungsstelle, miteinander verbunden sind.

Die erfindungsgemäße Sprechstelle weist an ihrer Gehäuserückseite eine Vielzahl von Anschlüssen auf. Hierzu gehören beispielsweise Spannungsversorgungsanschlüsse, Datenkabelanschlüsse, BNC-Anschlüsse und dergleichen. Insbesondere finden sich hier auch die Anschlüsse zur Verbindung dieser Sprechstelle mit der Vermittlungsstelle.

Im Übrigen wird zur Beschreibung einer Sprechstelle und zur Erläuterung deren Merkmale auf die oben angeführten Schutzrechtsanmeldungen der Anmelderin verwiesen.

Die erfindungsgemäße Sprechstelle ermöglicht die Bereitstellung einer Hör- und/oder Sprechverbindung zu einer ausgewählten anderen Sprechstelle des Intercom-Netzwerkes. Von der Erfindung sind aber auch Sprechstellen umfasst, die zusätzlich zu einer Übermittlung von Audiodaten auch noch Video- und/oder Datensignale mit übertragen und/oder empfangen können. Beispielsweise sind von der Erfindung auch Sprechstellen umfasst, die zusätzlich Videosignale auf einem an der Sprechstelle verbauten Display oder einer Anzeige darstellen oder wiedergeben können.

Die im Zuge der Bereitstellung einer Hör- und/oder Sprechverbindung mit übertragenen Daten, Signale oder Informationen können z. B. dazu verwendet werden, Statusinformationen zu übermitteln. Beispielsweise kann an eine bestimmte Sprechstelle des Intercom-Netzwerkes eine Information übermittelt werden, wie "Taste 3 leuchtet nun grün".

Gemäß einer vorteilhaften Ausgestaltung der Erfindung ist die Öffnung von einem schmalen langgestreckten Schlitz ausgebildet. Hierdurch wird die Möglichkeit bereitgestellt, die Öffnung besonders klein auszubilden und zugleich einen für den Durchtritt des vom Lautsprecher generierten Schalls ausreichend großen Öffnungsquerschnitt zu gewährleisten.

Schließlich kann hierdurch einerseits der erforderliche Platzbedarf für die Öffnung an der Gehäusefront minimiert werden. Zum anderen kann eine auf diese Weise ausgebildete Öffnung auch von einem anderen Element, z. B. von einem Griffelement, überbrückt oder übergriffen werden, ohne dass dies die Audioeigenschaften der Sprechstelle beeinträchtigt.

Gemäß einer weiteren vorteilhaften Ausgestaltung der Erfindung erstreckt sich der Schlitz in Vertikalrichtung oder im Wesentlichen in Vertikalrichtung. Hierdurch besteht die Möglichkeit, die Öffnung maximal nahe an seitlichen Wandungsabschnitten des Gehäuses zu positionieren und die gesamte Anordnungsfläche auf der Gehäusefront zur Positionierung von Bedienelementen und Displays mit einer maximalen, ununterbrochenen Breite zu gestalten.

In einer weiteren vorteilhaften Ausgestaltung der Erfindung beträgt der Öffnungsquerschnitt der Öffnung weniger als die Hälfte, weiter vorteilhafterweise weniger als ein Drittel, weiter vorteilhafterweise weniger als ein Viertel, weiter insbesondere weniger als ein Fünftel, weiter insbesondere weniger als ein Sechstel, weiter insbesondere weniger als ein Siebtel, der Schallaustrittsfläche. Damit ist die Öffnung mit einer lichten Weite oder einem lichten Querschnitt versehen, der erheblich kleiner ist, als die Schallaustrittsfläche des Lautsprechers.

Dadurch, dass der Öffnungsquerschnitt deutlich kleiner ist als die Schallaustrittsfläche kann ein qualitativ hochwertiger Lautsprecher für die Sprechstelle verwendet werden und zugleich, ohne Einbuße an Audioqualität an der Sprechstelle, eine gegenüber dem Stand der Technik vergrößerte Positionier- oder Anordnungsfläche für Bedienelemente, Displays, Anschlüsse, Buchsen oder dergleichen an der Gehäusefront erreicht werden.

In einer weiteren vorteilhaften Ausgestaltung der Erfindung weist die Gehäusefront eine rechteckförmige oder im Wesentlichen rechteckförmige Grundform auf. Die Sprechstelle gemäß der Erfindung kann hierdurch in Anlehnung an Sprechstellen des Standes der Technik dimensioniert und ausgebildet werden. Dies ermöglicht einen Rückgriff auf herkömmliche Bauteile und Elemente, z. B. auf herkömmliche Befestigungselemente zur Befestigung einer Sprechstelle in einem Rack oder Halterahmen oder Montagerahmen.

In einer weiteren vorteilhaften Ausgestaltung der Erfindung ist die Öffnung nahe eines seitlichen Randes der Grundfläche angeordnet. Hierdurch kann die Anordnungsfläche oder Positionierfläche für Bedienelemente, Displays, Anschlüsse und Buchsen oder andere Funktionselemente an der Gehäusefront unterbrechungsfrei gehalten und maximiert werden.

Gemäß einer weiteren vorteilhaften Ausgestaltung der Erfindung ist vorgesehen, dass der Lautsprecher nahe einer seitlichen Wand oder Wandungsfläche des Gehäuses angeordnet ist. Hierdurch besteht die Möglichkeit einer besonders einfachen Montage des Lautsprechers, da dieser beispielsweise unmittelbar an oder auf einfache Weise relativ zu einer seitlichen Gehäusewand des Gehäuses festgelegt oder montiert werden kann. Zum anderen besteht hierdurch die Möglichkeit, Griffelemente, mit denen das Gehäuse von einer Bedienperson gegriffen werden kann, der Gehäusefront anzuordnen und diese Griffelemente so zu positionieren, dass diese die Öffnung übergreifen oder überdecken und zugleich - in herkömmlicher Weise - seitlich am Gehäuse angeordnet sind.

In einer weiteren vorteilhaften Ausgestaltung der Erfindung ist zwischen der Schallaustrittsfläche des Lautsprechers und der Öffnung ein Schalltrichter angeordnet. Dieser Schalltrichter kann eine oder mehrere Wände umfassen, an der der Schall reflektiert und weitergeleitet wird. Der Schalltrichter weist einen Querschnitt auf, der sich von der Schallaustrittsfläche des Lautsprechers hin zu der Öffnung verkleinert, insbesondere kontinuierlich verkleinert.

Die Wandung des Schalltrichters kann dabei auf Wandungselemente des Gehäuses, z. B. auf Seitenwände des Gehäuses, zurückgreifen. Der Schalltrichter kann auch ausschließlich aus oder teilweise aus von den Wandungen des Gehäuses der Sprechstelle gesonderten Elementen gebildet sein. Beispielsweise können die Wandungen des Schalltrichters aus Metall oder Kunststoff gebildet sein.

Der Schalltrichter kann an die besonderen Erfordernisse der Schallweiterleitung von der Schallaustrittsfläche eines Lautsprechers hin zu der kleinen Öffnung angepasst oder optimiert sein. Insbesondere können die Wahl des Materials und die Geometrie der Wandungsbereiche des Schalltrichters im Hinblick auf die Audio-Anforderungen der Sprechstelle optimiert sein.

Gemäß der Erfindung ist insbesondere vorgesehen, dass die Gehäusefront von einer ebenen oder im Wesentlichen ebenen Fläche bereitgestellt ist. Der Begriff "im Wesentlichen eben" berücksichtigt dabei, dass aufgrund der Funktionselemente, Bedienelemente, Anschlussbuchsen oder Displays geringfügige Abweichungen von dieser Ebene zugelassen sind. Beispielsweise können Bedienelemente von der im Übrigen eben ausgebildeten Gehäusevorderseite vorstehen, und dem Benutzer einer erfindungsgemäßen Sprechstelle entgegentreten.

Gemäß einer weiteren vorteilhaften Ausgestaltung der Erfindung ist die Positionierung des Lautsprechers auf folgende besondere Weise vorgenommen worden: Der Lautsprecher ist derartig positioniert, dass die Schallaustrittsfläche relativ zu der Gehäusefront geneigt angeordnet ist. Insbesondere ist die Schallaustrittsfläche des Lautsprechers relativ zu der Gehäusefront unter einem spitzen Winkel, von beispielsweise 45° oder etwa 45°, geneigt angeordnet.

Hierdurch werden zum einen besonders vorteilhafte Möglichkeiten einer Befestigung, Anordnung und Montage des Lautsprechers, zugleich aber besonders vorteilhafte Anordnungs- und Befestigungs- und Konstruktionsmöglichkeiten eines vorteilhafterweise zu verwendenden Schalltrichters möglich.

Gemäß einer vorteilhaften Ausgestaltung der Erfindung ist die Schallaustrittsfläche des Lautsprechers parallel zu einer oder im wesentlichen parallel zu einer seitlichen Gehäusewandung des Gehäuses ausgerichtet.

Die Schallaustrittsfläche ist bei dieser Ausführungsform etwa 90° oder im wesentlichen lotrecht zu der Gehäusefront orientiert. Wiederum kann unter Zuhilfenahme eines zuvor bereits erwähnten Schalltrichters eine Schallweiterleitung von dem Lautsprecher zur Gehäusefront erfolgen.

Gemäß einer weiteren vorteilhaften Ausgestaltung der Erfindung sind die Auswahltasten in besonderer Weise ausgebildet. Demnach können zumindest einige der Auswahltasten unterschiedliche Positionen, nämlich vorteilhafterweise drei unterschiedliche Positionen einnehmen. Hiervon umfasst ist eine erste, insbesondere inaktive Mittelposition, in die hinein eine Auswahltaste vorgespannt ist. Darüber hinaus weist eine Auswahltaste zwei aktive Arbeitspositionen oder Endpositionen auf, nämlich eine erste, z. B. obere Endposition und eine zweite, z. B. untere Endposition.

Durch Angriff mittels eines Fingers oder einer Hand eines Benutzers kann dieser die Auswahltaste entweder - ausgehend von einer Mittellage - in eine obere Endposition oder alternativ in untere Endposition hin verlagern und damit betätigen. Sobald die Auswahltaste eine obere Endposition erreicht hat, hat die Bedienperson dieser Sprechstelle eine unmittelbare Sprechverbindung zu der Bedienperson einer anderen Sprechstelle erreicht. Wird die Auswahltaste in die andere Endposition hinein verlagert, erreicht die Bedienperson eine unmittelbare HörVerbindung zu dieser anderen Sprechstelle. Die entsprechende Sprech-oder Hörverbindung wird nur solange aufrechterhalten, wie die Bedienperson die Auswahltaste in ihrer Endposition hält, d. h. in die Endposition hin beaufschlagt. Sobald die Bedienperson die Auswahltaste los lässt, kehrt die Auswahltaste automatisch in ihre Mittelposition aufgrund einer Federvorspannung zurück.

Gemäß einer weiteren vorteilhaften Ausgestaltung der Erfindung sind an der Sprechstelle zwei Lautsprecher angeordnet. Hierdurch wird insbesondere ein Stereoempfang von Audiosignalen möglich.

Darüber hinaus ermöglicht die Erfindung auch eine Verwendung zumindest eines Lautsprechers in einem Mikrofonmodus. Hierdurch wird ein Audio-Monitoring der Sprechstelle möglich.

Gemäß einer weiteren vorteilhaften Ausgestaltung der Erfindung sind an der Gehäusefront seitlich nach außen vorstehende Befestigungsabschnitte angeordnet. Diese können weiter vorteilhafterweise jeweils Öffnungen für einen Durchgriff von Befestigungsmitteln aufweisen. Hierdurch kann in Anlehnung an herkömmlich ausgebildete Sprechstellen eine besonders vorteilhafte und einfache Befestigung der erfindungsgemäßen Sprechstelle an einem Montagerahmen z. B. einem Rack, ermöglicht werden.

Gemäß einer weiteren vorteilhaften Ausgestaltung der Erfindung ist an der Sprechstelle wenigstens ein Mikrofon fest angeordnet. Alternativ oder zusätzlich ist an der Gehäusefront der Sprechstelle wenigstens ein Anschluss für ein Mikrofon fest angeordnet. Dieser Anschluss kann beispielsweise von einer herkömmlichen Mikrofonbuchse gebildet sein. Dieser Anschluss ermöglicht eine unmittelbare Verbindung eines Mikrofons mit der Gehäusefront.

Gemäß einer weiteren vorteilhaften Ausgestaltung der Erfindung ist an der Gehäusefront mindestens ein Anschluss für ein Headset angeordnet. Hiermit wird eine komfortable Möglichkeit bereitgestellt, ein Headset, also eine Hör-Sprecheinheit, mit der Sprechstelle zu verbinden.

Gemäß einer weiteren vorteilhaften Ausgestaltung der Erfindung ist die Öffnung von einem Griffelement überdeckt. Ein solches Griffelement ermöglicht einer Bedienperson ein einfaches Fassen oder Greifen der Sprechstelle und einen bequemen handgetragenen Transport.

Insbesondere zum Zwecke der Vornahme einer Montage oder Demontage der Sprechstelle relativ zu einem Montagerahmen oder Montagegestell ist das Griffelement oder sind im Falle des Vorhandenseins mehrere Griffelemente die mehreren Griffelemente von Vorteil. Die Griffelemente können dabei derartig angeordnet und positioniert werden, dass sie die Öffnung teilweise oder vollständig übergreifen. Hierdurch wird eine besonders platzsparende Unterbringung einer Durchbrechung der Öffnung in der Gehäusefront für den Schallaustritt des von dem Lautsprecher erzeugten Schalls möglich.

Hierdurch kann die Positionier- oder Anordnungsfläche zur Unterbringung von Bedienelementen und/oder von Displays auf der Gehäusefront noch weiter maximiert und/oder optimiert werden.

Weitere Vorteile der Erfindung ergeben sich aus den nicht zitierten Unteransprüchen sowie anhand der nachfolgenden Beschreibung der in den Zeichnungen dargestellten Ausführungsbeispiele.

Darin zeigen:
- Fig. 1: in einer schematischen Vorderansicht die Gehäusefront eines Ausführungsbeispiels der erfindungsgemäßen Sprechstelle,
- Fig. 1a: in einer vergrößerten, schematischen Einzeldarstellung eine Auswahltaste etwa gemäß Teilkreis la in Fig. 1 zur Erläuterung der unterschiedlichen Stellungen und Positionen eines Betätigungselementes einer Auswahltaste,
- Fig.2: in einer schematischen Rückansicht die Sprechstelle der Fig. 1,
- Fig. 3: die Sprechstelle der Fig. 1 in einer teilgeschnittenen schematischen Draufsicht etwa entlang Schnittlinie III-III in Fig. 1, wobei zahlreiche Einzelteile der Übersichtlichkeit halber weggelassen worden sind,
- Fig. 4: ein Ausführungsbeispiel eines Intercom-Netzwerkes in einer blockschaltbildartigen, schematischen Darstellung, welches drei erfindungsgemäße Sprechstellen verwendet,
- Fig. 5: in einer schematischen Ansicht eine Gehäusefront einer Sprechstelle des Standes der Technik,
- Fig. 6: in einer vergrößerten teilgeschnittenen, schematischen Detaildarstellung den Anbindungsbereich eines Lautsprechers in einer Darstellung gemäß Fig. 3, etwa gemäß dem Teilkreis VI in Fig. 3,
- Fig. 7: in einer Darstellung gemäß Fig. 6 eine alternative Anordnung eines Lautsprechers mit einer geänderten Neigung einer Schallaustrittsfläche des Lautsprechers relativ zur Gehäusefront,
- Fig. 8: in einer teilgeschnittenen, schematischen, abgebrochenen und perspektivischen Ansicht ein weiteres Ausführungsbeispiel einer Sprechstelle, bei der an der Gehäusefront Griffelemente angeordnet sind, die die Öffnungen für den Schallaustritt überdecken,
- Fig. 9: in einer Darstellung ähnlich der Darstellung der Fig. 7 eine weitere alternative Anordnung eines Lautsprechers mit einer geändert orientierten Schallaustrittsfläche eines Lautsprechers in Bezug zur Gehäusefront, wobei hier - im Vergleich zu den Darstellungen der Figuren 6 und 7 - die andere, nämlich im Bezug auf Fig. 3 die rechte, Seitenwand des Gehäuses dargestellt ist, und wobei die Schallaustrittsfläche des Lautsprechers der Fig. 9 im wesentlichen parallel zu einer Seitenwand des Gehäuses ausgerichtet ist, und
- Fig. 10: ein weiteres Ausführungsbeispiel eines erfindungsgemäßen Intercom-Netzwerks unter Verwendung von zwei erfindungsgemäßen Sprechstellen in einer Darstellung gemäß Fig. 4, wobei die beiden Sprechstellen der Fig. 10 ohne Zwischenschaltung einer Vermittlungsstelle unmittelbar miteinander verbunden sind.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

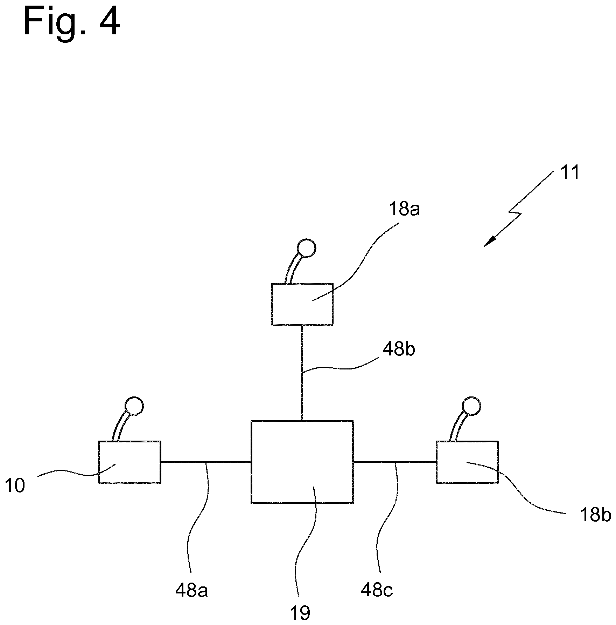

Die Sprechstelle ist in den Ausführungsbeispielen in den Zeichnungen in ihrer Gesamtheit mit 10 bezeichnet. Die Sprechstelle ist Bestandteil oder Teilnehmer eines Intercom-Netzwerkes 11, wie es anhand des Blockschaltbildes in Fig. 4 dargestellt ist. Ein solches Intercom-Netzwerk 11 umfasst eine Vermittlungsstelle 19 und eine Vielzahl von Sprechstellen 10, 18a, 18b, die über Verbindungsleitungen 48a, 48b, 48c miteinander in Verbindung stehen. Eine Sprechstelle 10, 18a, 18b ist über eine Verbindungsleitung 48a, 48b, 48c jeweils unmittelbar mit der Vermittlungsstelle 19 verbunden. Die Vermittlungsstelle 19 administriert dieses Intercom-Netzwerk 11.

Das Intercom-Netzwerk 11 dient zur Audio-Übertragung und bietet beispielsweise für temporär aufzubauende Netzwerke, wie beispielsweise bei Live-Veranstaltungen, wie Musikveranstaltungen oder Sportveranstaltungen, Kommunikationsmöglichkeiten.

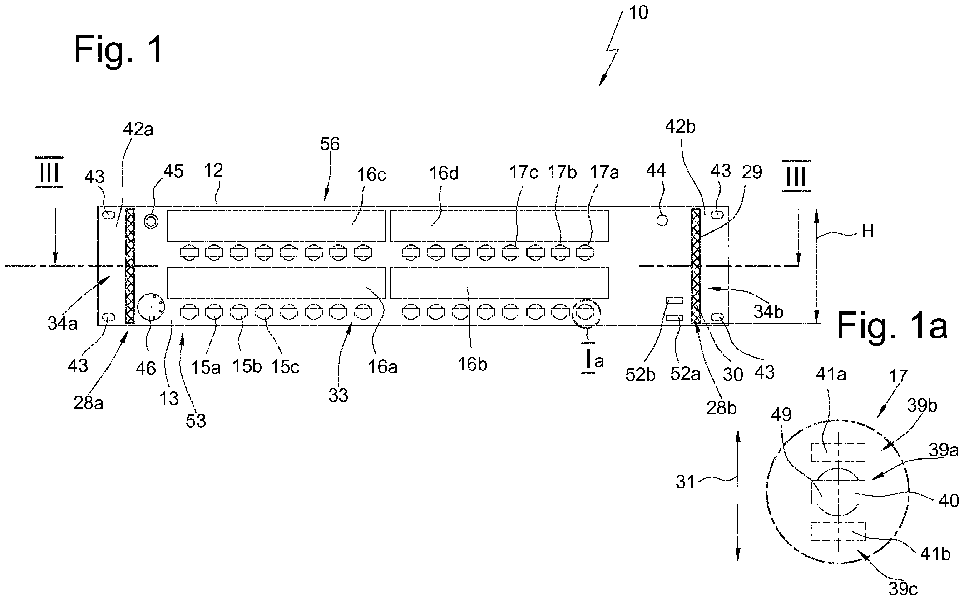

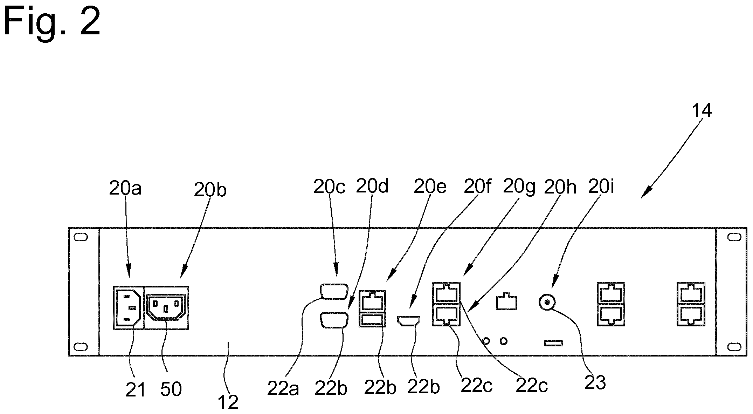

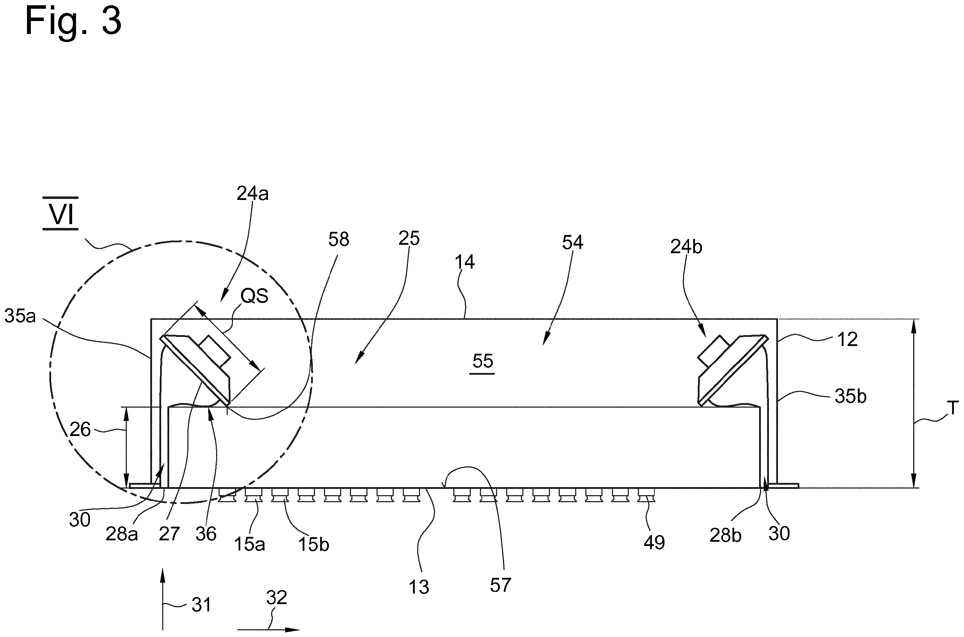

Die erfindungsgemäße Sprechstelle 10 umfasst ausweislich Fig. 1 ein Gehäuse 12, welches im Wesentlichen quaderförmig ausgebildet ist. In Fig. 1 ist die Front 13 des Gehäuses 12, in Fig. 2 ist die Gehäuserückseite 14 des Gehäuses 12 dargestellt, und in Fig. 3 ist gemäß diesem Ausführungsbeispiel der Erfindung ein Querschnitt durch das Gehäuse 12 dargestellt, so dass man hier Gehäusefront 13, Gehäuserückseite 14 und einen Unterbringungsraum 25 innerhalb des Gehäuses 12 erkennen kann.

Ausweislich Fig. 1 sind auf der Gehäusefront 13 eine Vielzahl von Bedienelementen 15a, 15b, 15c angeordnet, von denen lediglich einige mit Bezugszeichen versehen sind. Die Bedienelemente sind bei dem Ausführungsbeispiel in zwei Reihen und in insgesamt vier Gruppen angeordnet.

Die Bedienelemente 15a, 15b, 15c sind jeweils als Auswahltasten 17a, 17b, 17c, 17 ausgebildet, wobei wiederum nur einige Auswahltasten mit Bezugszeichen versehen sind.

Eine solche Auswahltaste 17 umfasst jeweils - ausweislich Fig. 1a - einen Betätigungshebel 49, der ausweislich der Teilkreisdarstellung der Fig. 1a vergrößert dargestellt ist. Demnach umfasst der Betätigungshebel 49 ein dem Betrachter der Fig. 1 entgegentretendes, von der Gehäusefront 13 vorspringendes Hebelelement 49, welches an seinem freien Ende vom Finger eines Benutzers gegriffen werden kann und ausgehend von einer Mittellage 40 in Vertikalrichtung 31 in eine obere Endlage 41a oder entgegen der Vertikalrichtung 31 in eine untere Endlage 41b verlagert werden kann. Das ausgelenkte, in der Endposition 41a, 41b befindliche Hebelelement 49 ist federvorgespannt in der Mittelposition 40. Es wird daher, sobald die Bedienperson den Hebel 49 loslässt, automatisch in die Mittellage 40 zurückversetzt.

Sobald eine Bedienperson eine Auswahltaste 17, 17a, 17b, 17c betätigt und in ihre Endposition 41a, 41b verlagert hat, wird mit der ausgewählten Sprechstelle 18a eine unmittelbare Hör- und/oder Sprechverbindung hergestellt. So kann beispielsweise in der Endlage 41a eine Sprechverbindung und in der Endlage 41b eine Hörverbindung erreicht sein. Man bezeichnet die unterschiedlichen Betriebsmodi auch als Speak/Listen-Modus.

Im Hinblick auf Fig. 1a wird angemerkt, dass das Betätigungselement 49 drei unterschiedliche Positionen 39a, 39b und 39b einnehmen kann.

Auf der Gehäusefront 13 des Gehäuses 12 sind bei dem Ausführungsbeispiel darüber hinaus vier Displays 16a, 16b, 16c, 16d angeordnet. Die Zahl der Displays 16a, 16b, 16c, 16d und die Zahl der Auswahltasten sind selbstverständlich beliebig.

Grundsätzlich geht es aber bei der erfindungsgemäßen Sprechstelle 10 darum, dass an der Gehäusefront 13 eine Vielzahl von Bedienelementen 15a, 15b, 15c, 15d und Displays 16a, 16b, 16c, 16d dicht gedrängt angeordnet werden können, um einerseits eine Vielzahl der Bedienungselemente, Displays und Anschlüssen unterzubringen, andererseits aber auch eine bequeme und sichere Bedienung und Erkennbarkeit der Elemente zu ermöglichen.

Bei dem Ausführungsbeispiel der Fig. 1 sind auf der Gehäusefront 33 neben den Auswahltasten 17, 17a, 17b, 17c eine Vielzahl von Anschlüssen vorgesehen: So zeigt Fig. 1 einen Mikrofonanschluss 45 und einen Headsetanschluss 46. Der Mikrofonanschluss 45 kann als Buchse für einen Klingenstecker ausgebildet sein und der Headsetanschluss 46 kann als XLR-male-Buchsenanschluss ausgebildet sein.

Schließlich sind bei dem Ausführungsbeispiel der Fig. 1 auf der Gehäusefront 13 auch noch zwei USB-Anschlüsse 52a, 52b vorgesehen.

Die Gehäusefront 13 weist darüber hinaus seitlich nach außen vorstehende Befestigungsabschnitte 42a, 42b auf, in denen eine Anzahl von Öffnungen 43 angeordnet ist. Mittels der seitlichen Befestigungsabschnitte 42a, 42b kann eine Befestigung der Sprechstelle 10 an einem Rack oder Montagerahmen erfolgen. Die Öffnungen 43 können hierzu von nicht dargestellten Befestigungsmitteln durchgriffen werden.

Zwischen den seitlichen Befestigungsabschnitten 42a, 42b und der Anordnungsfläche 53 für die Bedienelemente 15a, 15b, 15c, 15d und für die Displays 16a, 16b, 16c, 16d sind zwei Öffnungen 28a, 28b angeordnet, die nach Art von Schlitzen 30a, 30b ausgebildet sind. Hierbei handelt es sich um Austrittsöffnungen für Schall, der von Lautsprechern 24a, 24b erzeugt ist.

Wie am besten ausweislich der Darstellung in Fig. 3 deutlich wird, ist der Innenraum 54 des Gehäuses 12 von der Gehäusefront 13 und der Gehäuserückseite 14 und den seitlichen Wandflächen 35a, 35b des Gehäuses 12 umgeben. Darüber hinaus weist das Gehäuse 12 eine Bodenwand 55 auf und eine in Fig. 3 nicht dargestellte, in Fig. 1 angedeutete Deckenwand 56. Der Innenraum 54 wird also durch diese sechs Wandungsabschnitte begrenzt.

Die zahlreichen im Innenraum 54 des Gehäuses 12 anzuordnenden elektronischen Bauelemente, wie Platinen, Prozessoren, Kondensatoren, gegebenenfalls Transformatoren und andere elektronische Bauelemente sowie Kabel und Leiter sind nicht dargestellt. Es ist dem Fachmann aber deutlich, dass zu jedem Anschluss 45, 46, 52a, 52b auf der Gehäusefront 13 zu jedem Bedienelement 15a, 15b, 15c, 15d ein elektrischer Leiter verläuft.

Das Gleiche gilt für die auf der Gehäuserückseite 14 anzuordnenden Anschlüsse. Es besteht also ein nicht unerheblicher Verkabelungsaufwand innerhalb des Gehäuses 12.

Wie das Ausführungsbeispiel der Fig. 3 deutlich macht, ist im Innenraum 54 des Gehäuses 12 ein erster Lautsprecher 24a und ein zweiter Lautsprecher 24b angeordnet. Bei weiteren Ausführungsbeispielen der Erfindung, die in den Figuren nicht dargestellt sind, weist die Sprechstelle 10 nur einen Lautsprecher 24 auf.

Der Lautsprecher 24a ist um einen Versatz 26 von der Gehäusefront 13 beabstandet angeordnet. Der Versatz 26 beträgt bei dem Ausführungsbeispiel etwa die Hälfte der Tiefe T des Innenraums 54 des Gehäuses 12. Der Versatz 56 wird gemessen zwischen der Innenseite 57 der Gehäusefront 13 und dem Abschnitt 58 des Lautsprechers 24, der der Innenseite 57 am nächsten kommt.

Vorteilhafterweise beträgt der Versatz 26 bei Sprechstellen gemäß der Erfindung mindestens 10%, weiter insbesondere wenigstens 20%, weiter insbesondere wenigstens 25%, weiter insbesondere wenigstens 30% der Tiefe T des Innenraums 54 des Gehäuses 12.

Bei dem Ausführungsbeispiel der Fig. 3 ist der Lautsprecher 24, 24a, 24b ein herkömmlicher sogenannter Tauchspulenlautsprecher. Infolge der Verwendung eines solchen Lautsprechertyps kann eine sehr gute Audio-Wiedergabequalität erreicht werden. Auch kann ein Rückgriff auf herkömmliche Lautsprecher erfolgen.

Derartige Tauchspulenlautsprecher weisen eine Membran auf, deren Dimension die Größe des Lautsprechers bestimmt. Ausweislich des Ausführungsbeispiels der Fig. 3 weist der Lautsprecher 24 eine Quererstreckung QS auf, die dem Außendurchmesser der im Wesentlichen kreisförmig ausgebildeten Membran entspricht. Der Lautsprecher 24a weist also eine Schallaustrittsfläche 27 auf, die genauso groß ist wie die Membran. Die Schallaustrittsfläche 27 weist also einen Durchmesser auf, der der Quererstreckung QS entspricht.

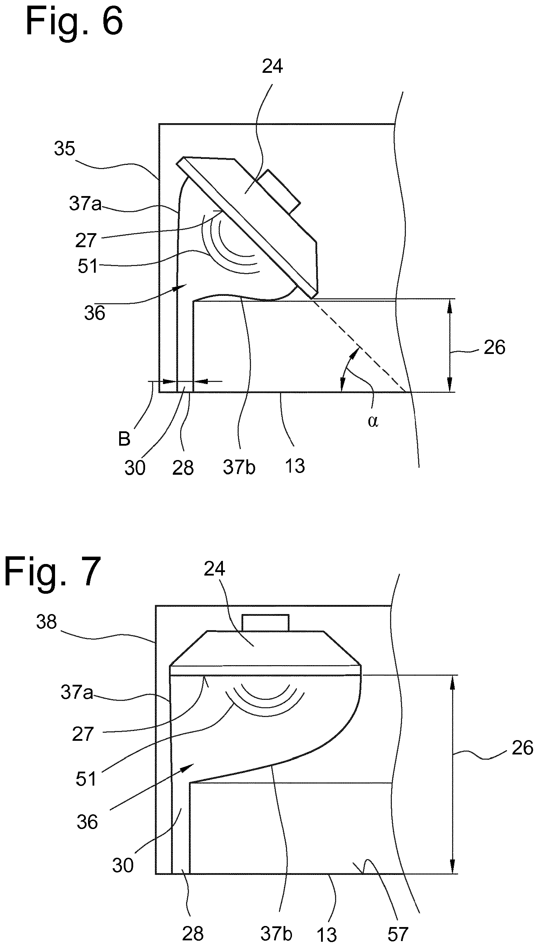

Der von dem Lautsprecher 24a generierte Schall wird - wie am besten anhand des detaillierter dargestellten Ausführungsbeispiels in Fig. 6 deutlich gemacht wird - als Schallwelle in Fig. 6 mit 51 bezeichnet. Diese Schallwellen werden, ausgehend von der Austrittsfläche 27 des Lautsprechers 24a zu der Öffnung 28 bzw. zu dem Schlitz 30 geleitet. Dies erfolgt bei dem Ausführungsbeispiel gemäß den Figuren durch die Anordnung eines Schalltrichters 36. Dieser weist insbesondere zum Teil gekrümmt ausgebildete Wandungsabschnitte 37a, 37b auf, so dass sich der Innenraum oder der lichte Querschnitt des Schalltrichters 36 von der Schallaustrittsfläche 27 bis hin zur Öffnung 28 kontinuierlich verkleinert.

Im Ergebnis kann die Öffnung 28 einen Öffnungsquerschnitt 29 aufweisen, der erheblich kleiner ist als die Schallaustrittsfläche 27.

Bei dem Ausführungsbeispiel der Fig. 6 weist die Öffnung 28 eine Breite B (vgl. Fig. 6) und eine Höhe H (vgl. Fig. 1) auf, die zu einem Öffnungsquerschnitt 29 als Produkt von Höhe H und Breite B führt, der erheblich kleiner ist als die Schallaustrittsfläche 27 des Lautsprechers 24a. Die Schallaustrittsfläche 27 besitzt eine Größe von π × (QS:2)².

Bereits auf den ersten Blick ergibt sich durch Betrachtung der Figuren 1 und 6 und durch Vergleich der Schallaustrittsfläche 27 mit der Öffnung 28, dass die Schallaustrittsfläche 27 erheblich größer ist die Öffnung 28.

Damit kann die Öffnung 28 an der Gehäusefront 13 sehr klein gehalten werden. Hierdurch wird die Anordnungsfläche 53 auf der Gehäusefront 13 maximiert. Es kann also eine Vielzahl von Bedienelementen 15a, 15b, 15c, 15d, insbesondere Auswahltasten 17, 17a, 17b, 17c und Displays 16a, 16b, 16c, 16d sowie Anschlüssen 52a, 52b, 45, 46 auf der Gehäusefront 13 untergebracht werden.

Bei dem Ausführungsbeispiel der Fig. 6 ist die Schallaustrittsfläche 27 unter einem 45°-Winkel (Bezugszeichen α) zur Gehäusefront 13 angeordnet.

Bei dem Ausführungsbeispiel der Fig. 7 ist der Lautsprecher 24 demgegenüber anders positioniert: Hier ist die Schallaustrittsfläche 27 parallel zu der Gehäusefront 13 ausgerichtet. Auch hier ist allerdings ein sehr großer Versatz 26 zwischen der Innenseite 57 der Gehäusefront 13 und der Schallaustrittsfläche 27 vorgesehen. Auch bei dem Ausführungsbeispiel der Fig. 7 ist ein Schalltrichter 36 mit Wandungsabschnitten 37a, 37b vorgesehen.

Bei weiteren, in den Figuren nicht dargestellten Ausführungsbeispielen der Erfindung kann der Schalltrichter 36 auch von Innenflächen von Abschnitten 35a, 57 des Gehäuses 12 gebildet oder teilweise gebildet sein.

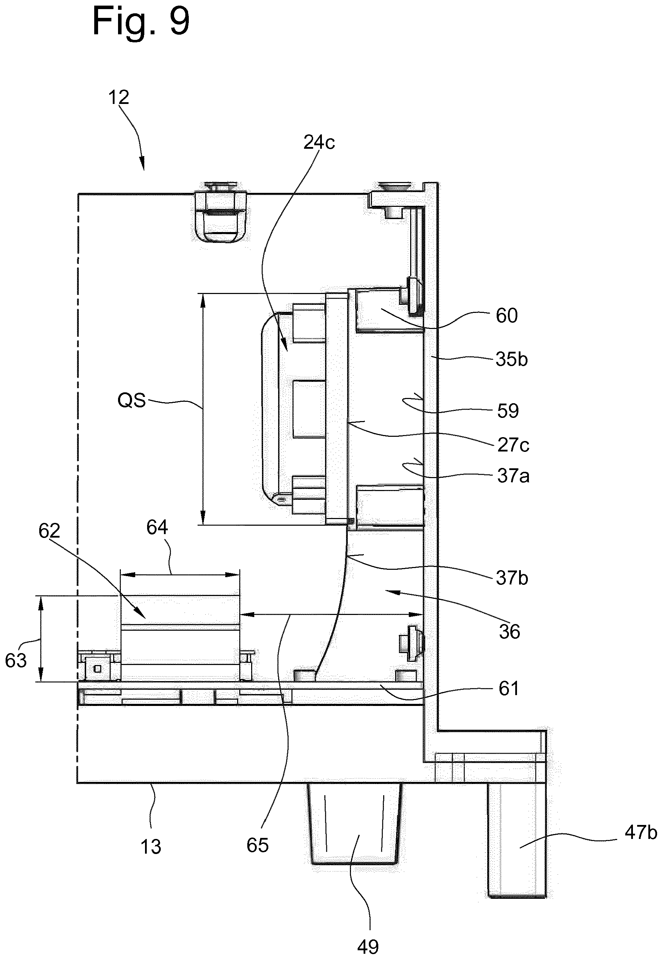

Bei dem Ausführungsbeispiel der Fig. 9 ist eine zu den Darstellungen der Figuren 6 und 7 geringfügig geänderte Darstellung getroffen:
Hier ist die seitliche, bezogen auf Fig. 3 rechte Wandfläche 35b des Gehäuses 12 und ein entsprechender, bezogen auf Fig. 3 rechter Abschnitt der Gehäusefront 13 dargestellt.

Der Lautsprecher 24c weist eine Schallaustrittsfläche 27c auf, die parallel zu der Seitenwand 35b orientiert ist.

Der Schalltrichter 36 wird hier durch Wandungsabschnitte 37a, 37b bereitgestellt, wobei die Wandungsabschnitte 37a des Schalltrichters 36 der Innenseite 59 der Seitenwand 35b entsprechen.

Man erkennt Befestigungselemente 60, die eine Befestigung des Lautsprechers 24c unmittelbar an der Seitenwand 35b des Gehäuses 12 ermöglichen.

In Fig. 9 ist mit dem Bezugszeichen 61 eine Platine bezeichnet, auf der eine Vielzahl elektronischer Bauelemente angeordnet sein kann. Beispielsweise wird mit 62 ein elektronisches Bauelement bezeichnet, welches eine vorgegebene Höhe 63 und eine vorgegebene Breite 64 aufweist.

Man erkennt bei Betrachtung der Fig. 9, dass der zwischen dem Bauelement 62 und der Gehäuseseitenwand 35b verbleibende Freiraum eine lichte Weite 65 aufweist, die kleiner ist, als die Quererstreckung QS des Lautsprechers.

Durch die erfindungsgemäße Rückverlagerung bzw. den Versatz des Lautsprechers 24c bezogen auf die Gehäusefront 13 nach hinten, besteht also überhaupt erst die Möglichkeit, das elektronische Bauelement 62 an der in Fig. 9 dargestellten Position auf der Platine 61 anzuordnen.

Angemerkt sei, dass in Fig. 9 der Übersichtlichkeit halber die Schallaustrittsöffnung 19, 20, 30 an der Gehäusewand 12 nicht dargestellt ist, aber selbstverständlich vorhanden ist.

Ausweislich der Fig. 1 ist die Öffnung 28 als Ausnehmung in der Gehäusefront 13 nach Art eines Schlitzes 30 vorgesehen. Dieser ist in Vertikalrichtung 31 lang gestreckt ausgebildet. Hierdurch wird eine sehr schmale, kleine Öffnung auf der Gehäusefront 13 ermöglicht.

Die Gehäusefront 13 weist, wie Fig. 1 deutlich macht, eine rechteckige Grundfläche 33 auf. Die im Bereich des Seitenrandes 34a, 34b der Grundfläche bei dem Ausführungsbeispiel vorgesehene Positionierung der beiden Schlitze 30a, 30b ist von Vorteil. Die Anordnungsfläche 53 für die Bedienelemente 15a, 15b, 15c, 15d und die Displays 16a, 16b, 16c, 16d kann auf diese Weise unterbrechungsfrei maximiert werden.

Der Vollständigkeit halber wird anhand des Ausführungsbeispiels der Fig. 2 noch die Rückseite des Gehäuses 12 beschrieben. Hier gibt es eine Vielzahl von Anschlüssen 20a, 20b, 20c, 20d, 20e, 20f, 20g, 20h, 20i, die lediglich beispielhaft dargestellt sind. Beispielsweise erkennt man einen Spannungsversorgungsanschluss 21, der eine Verbindung der Sprechstelle 10 mit einer 220 V-Netzleitung ermöglicht. Darüber hinaus ist ein Anschluss 50 zur Netzanschluss-Weiterschleifung vorgesehen. An den Anschluss 50 kann insoweit ein weiteres netzspannungserforderndes elektrisches oder elektronisches Gerät angeschlossen werden.

An der Gehäuserückseite 14 sind darüber hinaus Datenkabelanschlüsse 22a, 22b, 22c angeordnet. Es kann sich hier um diverse Buchen für unterschiedliche Steckerformate, wie beispielsweise HDMI, GPIO, Dual-Ethernet, 4 w analog oder andere Anschlüsse handeln. Fig. 2 verdeutlicht auch einen BNC-Anschlussbuchse 23 zum Anschluss eines BNC-Kabels.

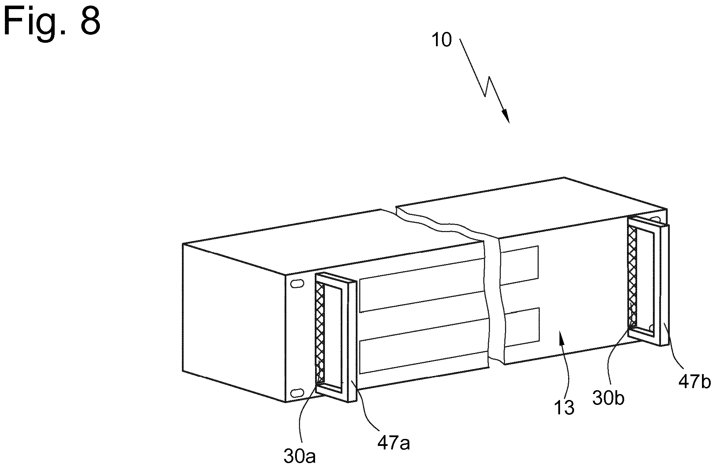

Wie das Ausführungsbeispiel der Fig. 8 schließlich deutlich macht, sind bei einem weiteren Ausführungsbeispiel Griffelemente 47a, 47b vorgesehen, die die Schlitze 30a, 30b überdecken. Die Griffelemente 47a, 47b sind ebenfalls im Bereich der seitlichen Ränder 34a, 34b der Grundfläche 33 der Sprechstelle 10 angeordnet.

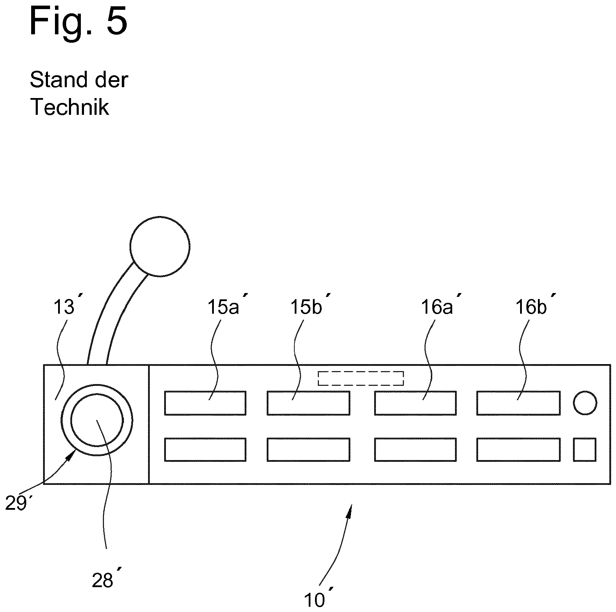

Im Folgenden soll noch kurz anhand der Fig. 5 eine Sprechstelle 10' des Standes der Technik erläutert werden:
Bezüglich der Sprechstelle 10'des Standes der Technik in Fig. 5 werden der Einfachheit halber gleiche Bezugszeichen, jeweils ergänzt durch einen Apostroph, verwendet.

Die Sprechstelle 10' gemäß Fig. 5 weist auch beim Stand der Technik bereits programmierbare Bedienelemente 15a`, 15b` auf, die auch als Displays 16a`, 16b` fungieren können. Hier ist bei 28' eine Öffnung für einen fest installierten, nicht dargestellten Lautsprecher vorgesehen.

Der Öffnungsquerschnitt 29' der Öffnung 28' für den Schallaustritt ist hier so groß ausgebildet, wie der in Fig. 5 nicht sichtbare, in Blickrichtung des Betrachters in Fig. 5 hinter der Gehäusefront 13' liegende Lautsprecher.

Bei dem Ausführungsbeispiel gemäß der Erfindung ist die Öffnung 28 in der Gehäusefront 13 von jeglichen Elementen freigehalten. Von der Erfindung ist allerdings auch umfasst, wenn die Öffnung 28 vollständig oder teilweise mit Lautsprechergittern oder Matten aus Kunststoff oder aus textilen Materialien, wie diese auch üblicherweise bei anderen Schallaustrittsöffnungen für Lautsprecher in Gehäusen verwendet werden, durchsetzt oder durchgriffen ist.

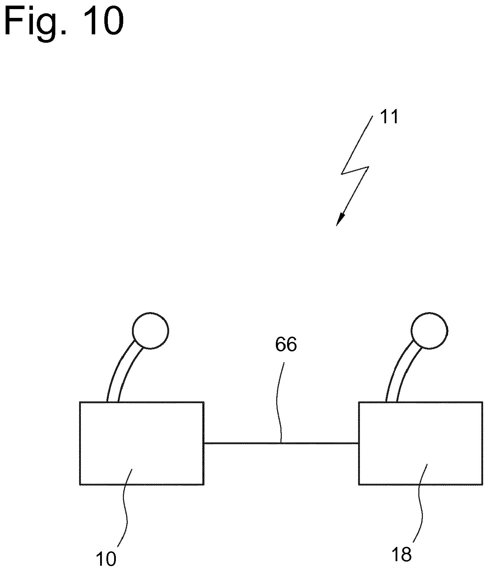

Ergänzend sei unter Bezugnahme auf Fig. 10 hiermit erläutert, dass bei einem weiteren erfindungsgemäßen Ausführungsbeispiel eines Intercom-Netzwerkes 11 eine erfindungsgemäße Sprechstelle 10 mit einer anderen Sprechstelle 18 des Intercom-Netzwerkes 11 unmittelbar über eine Verbindungsleitung 66, ohne Zwischenschaltung einer Vermittlungsstelle, verbunden ist.

## Patentansprüche

1. Sprechstelle (10) für ein Intercom-Netzwerk (11), umfassend ein Gehäuse (12), mit einer Gehäusefront (13) und einer Gehäuserückseite (14), wobei an der Gehäusefront (13) dicht gedrängt eine Vielzahl von Bedienelementen (15a, 15b, 15c, 15d) und mehreren Displays (16a, 16b, 16c, 16d) angeordnet ist, wobei die Bedienelemente eine Vielzahl von Auswahltasten (17a, 17b, 17c, 17d) umfassen, wobei die Sprechstelle infolge einer Betätigung einer Auswahltaste durch eine Bedienperson eine unmittelbare Hör- und/oder Sprechverbindung zu einer ausgewählten anderen Sprechstelle (18a, 18b) des Intercom-Netzwerkes bereitstellt, wobei an der Gehäuserückseite (14) eine Vielzahl von Anschlüssen (20a, 20b, 20c, 20d), wie Spannungsversorgungsanschluss, Datenkabelanschluss, BNC-Anschluss, angeordnet ist, wobei an der Sprechstelle wenigstens ein Lautsprecher (24a, 24b) fest angeordnet ist, wobei der Lautsprecher in einem Unterbringungsraum (25) zwischen Gehäusefront (13) und Gehäuserückseite (14), relativ zu der Gehäusefront (13) nach hinten versetzt (26), untergebracht ist, und wobei der Lautsprecher (24a, 24b) eine Schallaustrittsfläche (27) aufweist, von der der Schall zu einer Öffnung (28) in der Gehäusefront (13) propagiert, wobei die Öffnung einen Öffnungsquerschnitt (29) aufweist, der nur einen Bruchteil der Schallaustrittsfläche (27) beträgt, wobei der Bruchteil ein Anteil ist, der nicht größer ist als 50% der Schallaustrittsfläche (27)

2. Sprechstelle nach Anspruch 1, **dadurch gekennzeichnet, dass** die Öffnung (28, 28a, 28b) von einem schmalen Schlitz (30, 30a, 30b) gebildet ist.

3. Sprechstelle nach Anspruch 2, **dadurch gekennzeichnet, dass** sich der Schlitz (30, 30a, 30b) in Vertikalrichtung (31) erstreckt.

4. Sprechstelle nach einem der vorangegangenen Ansprüche, **dadurch gekennzeichnet, dass** der Öffnungsquerschnitt (29) weniger als die Hälfte, insbesondere weniger als ein Drittel, weiter insbesondere weniger als ein Viertel, weiter insbesondere weniger als ein Fünftel, weiter insbesondere weniger als ein Sechstel, weiter insbesondere weniger als ein Siebtel, der Schallaustrittsfläche (27) beträgt.

5. Sprechstelle nach einem der vorangegangenen Ansprüche, **dadurch gekennzeichnet, dass** die Gehäusefront (13) eine rechteckförmige oder im Wesentlichen rechteckförmige Grundfläche (33) aufweist.

6. Sprechstelle nach Anspruch 5, **dadurch gekennzeichnet, dass** die Öffnung (28, 28a, 28b) nahe eines Seitenrandes (34a, 34b) der Grundfläche angeordnet ist.

7. Sprechstelle nach einem der vorangegangenen Ansprüche, **dadurch gekennzeichnet, dass** der Lautsprecher (24a, 24b) nahe einer seitlichen Wandfläche (35a, 35b) des Gehäuses (12) angeordnet ist.

8. Sprechstelle nach einem der vorangegangenen Ansprüche, **dadurch gekennzeichnet, dass** zwischen der Schallaustrittsfläche (27) des Lautsprechers (24a, 24b) und der Öffnung (28, 28a, 28b) ein Schalltrichter (36) angeordnet ist.

9. Sprechstelle nach Anspruch 8, **dadurch gekennzeichnet, dass** der Schalltrichter (36) Wandungsabschnitte (37a, 37b) aufweist, die von Bestandteilen des Gehäuses gebildet sind, und/oder die von einem von dem Gehäuse gesonderten Element gebildet sind.

10. Sprechstelle nach einem der vorangegangenen Ansprüche, **dadurch gekennzeichnet, dass** die Schallaustrittsfläche (27) zu der Gehäusefront (13) geneigt, insbesondere unter einem spitzen Winkel (α) geneigt, weiter insbesondere unter einem Winkel von 45° oder etwa 45° geneigt, angeordnet ist, oder dass die Schallaustrittsfläche (27) des Lautsprechers (24c) parallel oder im wesentlichen parallel zu einer seitlichen Wandfläche (35b) des Gehäuses (12) ausgerichtet ist.

11. Sprechstelle nach einem der vorangegangenen Ansprüche, **dadurch gekennzeichnet, dass** an der Gehäusefront (13) seitlich nach außen vorstehende Befestigungsabschnitte (42a, 42b) angeordnet sind, die jeweils Öffnungen (43) für einen Durchgriff von Befestigungsmitteln aufweisen.

12. Sprechstelle nach einem der vorangegangenen Ansprüche, **dadurch gekennzeichnet, dass** an der Sprechstelle wenigstens ein Mikrofon fest angeordnet ist, und/oder dass an der Gehäusefront (13) der Sprechstelle (10) wenigstens ein Anschluss (45) für ein Mikrofon fest angeordnet ist.

13. Sprechstelle nach einem der vorangegangenen Ansprüche, **dadurch gekennzeichnet, dass** an der Gehäusefront (13) wenigstens ein Anschluss (46) für ein Headset angeordnet ist.

14. Sprechstelle nach einem der vorangegangenen Ansprüche, **dadurch gekennzeichnet, dass** die Öffnung (28, 28a, 28b) von einem Griffelement (47a, 47b) überdeckt ist.

## Claims

1. Speaking station (10) for an intercom network (11), comprising a housing (12) having a housing front (13) and a housing back (14), wherein a plurality of control elements (15a, 15b, 15c, 15d) and several displays (16a, 16b, 16c, 16d) are arranged tightly packed on the housing front (13), wherein the control elements comprise a plurality of selection keys (17a, 17b, 17c, 17d), wherein the speaking station provides a direct audio and/or speech connection to a selected other speaking station (18a, 18b) of the intercom network following an actuation of a selection key by an operator, wherein a plurality of connections (20a, 20b, 20c, 20d), such as a voltage supply connection, data cable connection, BNC connection, is arranged on the housing back (14), wherein at least one loudspeaker (24a, 24b) is fixedly arranged on the speaking station, wherein the loudspeaker is housed in a housing space (25) between the housing front (13) and the housing back (14), offset (26) rearwards relative to the housing front (13), and wherein the loudspeaker (24a, 24b) has a sound output surface (27), from where the sound propagates to an opening (28) in the housing front (13), wherein the opening has an opening cross-section (29) that only amounts to a fraction of the sound output surface (27), wherein the fraction is a portion that is no larger than 50% of the sound output surface (27).

2. Speaking station according to claim 1, **characterised in that** the opening (28, 28a, 28b) is formed by a narrow slit (30, 30a, 30b).

3. Speaking station according to claim 2, **characterised in that** the slit (30, 30a, 30b) extends in the vertical direction (31).

4. Speaking station according to one of the preceding claims, **characterised in that** the opening cross section (29) amounts to less than half, in particular less than a third, more particularly less than a quarter, more particularly less than a fifth, more particularly less than a sixth, more particularly less than a seventh of the sound output surface (27).

5. Speaking station according to one of the preceding claims, **characterised in that** the housing front (13) has a rectangular or substantially rectangular base surface (33).

6. Speaking station according to claim 5, **characterised in that** the opening (28, 28a, 28b) is arranged close to a side edge (34a, 34b) of the base surface.

7. Speaking station according to one of the preceding claims, **characterised in that** the loudspeaker (24a, 24b) is arranged close to a lateral wall surface (35a, 35b) of the housing (12).

8. Speaking station according to one of the preceding claims, **characterised in that** an acoustic horn (36) is arranged between the sound output surface (27) of the loudspeaker (24a, 24b) and the opening (28, 28a, 28b).

9. Speaking station according to claim 8, **characterised in that** the acoustic horn (36) has wall portions (37a, 37b) formed by components of the housing, and/or formed by an element separate from the housing.

10. Speaking station according to one of the preceding claims, **characterised in that** the sound output surface (27) is arranged angled towards the housing front (13), in particular angled at an acute angle (α), more particularly angled at an angle of 45° or approximately 45°, or **in that** the sound output surface (27) of the loudspeaker (24c) is aligned in parallel or substantially in parallel to a lateral wall surface (35b) of the housing (12).

11. Speaking station according to one of the preceding claims, **characterised in that** fixing portions (42a, 42b) protruding laterally outwards are arranged on the housing front (13), said fixing portions respectively having openings (43) for penetration by fixing means.

12. Speaking station according to one of the preceding claims, **characterised in that** at least one microphone is fixedly arranged on the speaking station and/or **in that** at least one connection (45) for a microphone is fixedly arranged on the housing front (13) of the speaking station (10).

13. Speaking station according to one of the preceding claims, **characterised in that** at least one connection (46) for a headset is arranged on the housing front (13).

14. Speaking station according to one of the preceding claims, **characterised in that** the opening (28, 28a, 28b) is covered by a grip element (47a, 47b).

## Revendications

1. Poste téléphonique (10) pour un réseau d'intercommunication (11), comprenant un boîtier (12) qui présente une face avant de boîtier (13) et une face arrière de boîtier (14), dans lequel une pluralité d'éléments de commande (15a, 15b, 15c, 15d) et plusieurs écrans d'affichage (16a, 16b, 16c, 16d) sont agencés de façon serrée sur la face avant (13) du boîtier, dans lequel les éléments de commande comprennent une pluralité de touches de sélection (17a, 17b, 17c, 17d), dans lequel le poste téléphonique, suite à l'actionnement d'une touche de sélection par un opérateur, établit une liaison directe d'écoute et/ou vocale avec un autre poste téléphonique sélectionné (18a, 18b) du réseau d'intercommunication, dans lequel une pluralité de connecteurs (20a, 20b, 20c, 20d), tels qu'un connecteur d'alimentation en tension, un connecteur de câble de données ou un connecteur BNC, sont prévus sur la face arrière (14) du boîtier, dans lequel au moins un haut-parleur (24a, 24b) est agencé fixement sur le poste téléphonique, le haut-parleur étant installé à l'intérieur d'un espace de réception (25) situé entre la face avant (13) du boîtier et la face arrière (14) du boîtier, et décalé vers l'arrière (26) par rapport à la face avant (13) du boîtier, et dans lequel le haut-parleur (24a, 24b) présente une surface de sortie de son (27) à partir de laquelle le son se propage en direction d'une ouverture (28) dans la face avant (13) du boîtier, l'ouverture présentant une section d'ouverture (29) qui ne représente qu'une fraction de la surface de sortie de son (27), ladite fraction étant une proportion qui n'est pas supérieure à 50 % de la surface de sortie de son (27).

2. Poste téléphonique selon la revendication 1, **caractérisé en ce que** l'ouverture (28, 28a, 28b) est formée par une fente étroite (30, 30a, 30b).

3. Poste téléphonique selon la revendication 2, **caractérisé en ce que** la fente (30, 30a, 30b) s'étend dans la direction verticale (31).

4. Poste téléphonique selon l'une quelconque des revendications précédentes, **caractérisé en ce que** la section d'ouverture (29) est inférieure à la moitié, en particulier inférieure à un tiers, plus particulièrement inférieure à un quart, plus particulièrement inférieure à un cinquième, plus particulièrement inférieure à un sixième, et plus particulièrement inférieure à un septième de la surface de sortie de son (27).

5. Poste téléphonique selon l'une quelconque des revendications précédentes, **caractérisé en ce que** la face avant (13) du boîtier présente une surface de base (33) rectangulaire ou sensiblement rectangulaire.

6. Poste téléphonique selon la revendication 5, **caractérisé en ce que** l'ouverture (28, 28a, 28b) est située à proximité d'un bord latéral (34a, 34b) de la surface de base.

7. Poste téléphonique selon l'une quelconque quelconque des revendications précédentes, **caractérisé en ce que** le haut-parleur (24a, 24b) est disposé à proximité d'une surface de paroi latérale (35a, 35b) du boîtier (12).

8. Poste téléphonique selon l'une quelconque des revendications précédentes, **caractérisé en ce qu'**un pavillon acoustique (36) est disposé entre la surface de sortie de son (27) du haut-parleur (24a, 24b) et l'ouverture (28, 28a, 28b).

9. Poste téléphonique selon la revendication 8, **caractérisé en ce que** le haut-parleur (36) comprend des parties de paroi (37a, 37b) qui sont formées par des éléments constitutifs du boîtier et/ou qui sont formées par un élément distinct du boîtier.

10. Poste téléphonique selon l'une quelconque des revendications précédentes, **caractérisé en ce que** la surface de sortie de son (27) est inclinée par rapport à la face avant (13) du boîtier, en particulier est inclinée selon un angle aigu (α), plus particulièrement est inclinée selon un angle de 45° ou d'approximativement 45°, ou **en ce que** la surface de sortie de son (27) du haut-parleur (24c) est orientée parallèlement ou sensiblement parallèlement à une surface de paroi latérale (35b) du boîtier (12).

11. Poste téléphonique selon l'une quelconque des revendications précédentes, **caractérisé en ce que** des parties de fixation (42a, 42b) faisant saillie latéralement vers l'extérieur sont agencées sur la face avant (13) du boîtier et comportent chacune des ouvertures (43) destinées à permettre le passage de moyens de fixation.

12. Poste téléphonique selon l'une quelconque des revendications précédentes, **caractérisé en ce qu'**au moins un microphone est monté fixement sur le poste téléphonique et/ou **en ce qu'**au moins un connecteur (45) pour microphone est agencé fixement sur la face avant (13) du boîtier du poste téléphonique (10).

13. Poste téléphonique selon l'une quelconque des revendications précédentes, **caractérisé en ce qu'**au moins un connecteur (46) pour oreillette est prévu sur la face avant du boîtier (13).

14. Poste téléphonique selon l'une quelconque des revendications précédentes, **caractérisé en ce que** l'ouverture {28, 28a, 28b) est recouverte par un élément de poignée (47a, 47b).
